# EUROPEAN PATENT SPECIFICATION

(11) **EP 1 581 061 B1**
(45) Date of publication and mention of the grant of the patent: **26.03.2008**
(21) Application number: 02788513.6
(22) Date of filing: 20.11.2002
(51) Int. Cl.: B07B 13/16, A22C 25/04

(54) **IN-FEED DISTRIBUTING UNIT**
VORRICHTUNG ZUR VERTEILENDEN ZUFÜHRUNG
UNITE DE DISTRIBUTION D'ENTREE

(30) Priority: 20.11.2001 IS 616701
(43) Date of publication of application: 05.10.2005
(73) Proprietor: STYLE EHF., 210 Gardabaer (IS)
(72) Inventor: MAGNUSSON, Ragnar, IS-210 Gardabaer (IS); RAGNARSSON, Egill, Thor, IS-210 Gardabaer (IS)
(74) Representative: Hardarson, Gunnar Örn
(86) International application number: PCT/IS2002/000019
(87) International publication number: WO 2003/043428

(56) References cited:
- WO-A-96/41541
- US-A- 2 314 479
- US-A- 4 956 078

## Description

### Field of the invention

The present invention relates to an in-feed distributing unit for distributing an uneven stream of individual objects to be graded or handled in other way.

### Background

The grading of objects such as fish and marine species such as capilion and herring can be a difficult task. The reason being their small size and the volume to be processed at each time combined with that the quality of fish deteriorates quickly if not stored at sub zero temperature. The grading therefore has to be highly efficient. The purpose of the grading is primarily to separate the species by size and/or sex.

An effective apparatus exist using ridge belts which are drawn by a drive along guides, which are wider at the output end than at the intake end and convey the material gently without vibration or rubbing.

An essential part for such grading machines is the feeding mechanism for ensuring that the objects, when they enter the in-feed end of the grading machine, are uniformly distributed. This has been solved in different ways. One preferred way is to use a plurality of incline stages/steps as described in US 6,321,914, for example with three stages, where the first stage, which is provided with two side panel, is a stage where an uneven stream of objects is introduced. The second stage, which is positioned under the first stage, is provided with a number of side or dividing panels (more than two panels) and forms four chutes and the third stage is provided with for example seven side panels, which forms six chutes. Accordingly, from the first stage one stream of objects is formed as the objects slide from the first stage to the second stage, where four streams of objects are formed that leave the second stage and enter the third stage where finally six streams of objects are formed that leave the third stage and enter the in-feed end of the grading machine.

Further methods and apparatus for sorting marine species are known from documents US-A-2 314 479 and WO-A-96/41541.

The problem with such feeding mechanism is how space demanding it is and that the distribution of the objects could be better. This mechanism for example does not allow side- or perpendicular in-feed.

### Description of the invention

It is an object of the present invention to provide a feeding mechanism for objects such as capilion, herring, shrimps, that both requires less space than known mechanism and increases the distribution of the objects before entering the in-feed part of grading machines.

According to the first aspect the present invention relates to an in-feed distributing unit for distributing an uneven stream of individual objects intended to be graded or handled in other way, wherein the distributing unit comprises:
• a frame,
• a sliding member having an in-feed area and an out-feed area and a base unit having an approximately planar surface arranged incline on the frame,
• one or more conveyors running at one or more conveying speed arranged below said sliding member adapted to receive the released objects from out-feed area of said sliding member and optionally from the upper arranged conveyor and advancing the objects in the forward direction, and
• grading means arranged below said one or more conveyors for receiving and grading the objects from said conveyors,
wherein said base unit is at least partly moveable in its plane in a continuous eccentric movement, following in that the introduced objects at the in-feed area slide towards said out-feed area due to the incline arrangements of the base unit while being distributed along said base unit through said eccentric movement and wherein said one or more conveyors are adapted to distribute the objects further in the conveying direction through said one or more conveying speed and thereby preparing the objects for grading.

The object may be marine species such as capilion and/or herring and/or shrimps.

In one preferred embodiment the in-feed distributing unit further comprises a plurality of dividing boards extended side-by-side substantially perpendicular to the conveying direction arranged in-between said grading means and its nearest adjacent conveyor adapted to ensure that the objects falling from said nearest adjacent conveyor onto said grading means lie parallel to the conveying direction of the grading. In one embodiment the cross-section shape of the boards is triangular shaped with the broader end arranged adjacent to said grading means and the narrower end to said nearest adjacent conveyor. Furthermore, the shape of each respective board is in one embodiment step-wise in its longitudinal direction along the conveying direction so that the higher or highest step is facing the in-feed unit and the lower or lowest step is facing the grader. In another embodiment the dividing boards are inclined arranged so that the higher side is facing the in-feed unit and the lower side the grader.

The number of conveyors may be one ore more, such as two or more, and wherein the conveyor speed is such that the speed of the uppermost conveyor is lowest and increases with the subsequent below arranged conveyor or conveyors.

According to the second aspect the present invention relates to a method for distributing an uneven stream of individual objects intended to be graded or handled in other way, said method comprising:
• feeding the objects to be graded to a sliding member having an in-feed area and an out-feed area and a base unit having an approximately planar surface arranged incline on the frame,
• arranging one or more conveyors running at one or more conveying speed below said sliding member for receive the released objects from out-feed area of said sliding member and optionally from the upper arranged conveyor and advancing the objects in the forward direction, and
• grading the objects from said one or more conveyors,
wherein said base unit is at least partly moveable in its plane in a continuous eccentric movement, following in that the introduced objects at the in-feed area slide towards said out-feed area due to the incline arrangements of the base unit while being distributed along said base unit through said eccentric movement and wherein said one or more conveyors are adapted to distribute the objects further in the conveying direction through said one or more conveying speed and thereby preparing the objects for grading.

### Detailed description

In the following the present invention and in particular preferred embodiments thereof are described in more details in connection with the accompanying drawings in which
Figure 1a and 1b shows a side and top view of an in-feed distributing unit,
Figure 2a and 2b shows one embodiment of an dividing board adapted to ensure that the objects falling from a conveyor to a grading means lie parallel to the conveying direction,
Figure 3 shows one embodiment of means for generating an eccentric movement of the base unit, and
Figure 4a-c shows the sliding member from Fig. 1 and its movements.

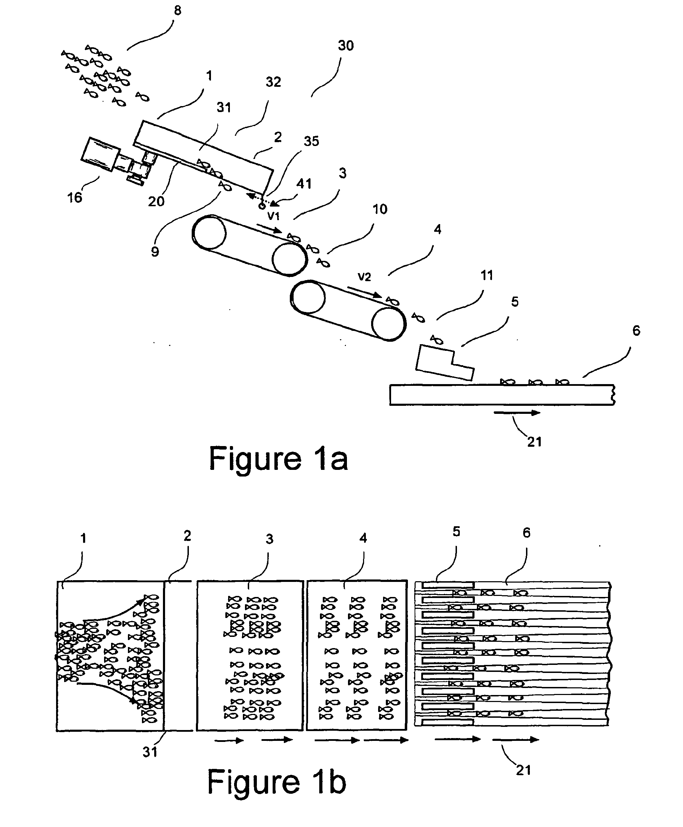

Figure 1a shows a side view of the in-feed distributing unit, showing sliding member (32) having base unit (20) with an in-feed area (1) and an out-feed area (2), side walls (31), a first conveyor 3 running at a conveyor speed v1, and a second conveyor (4) running at a second conveyor speed v2, dividing boards (5), a grading means (6) and means (16) for generating a eccentric movement and/or rotational movement of the base unit (20). In this embodiment two hinges (8) are provided to the sliding member (32) and act as a supporting means for the out-feed part (2) and are preferably independent of each other. The movement provided under the in-feed area (3), which is preferably eccentric orbit movement, but may also be rotational movement, is partly transformed to the out-feed area part (2), preferably in such a way that it is mainly visible as a linear motion. The hinges (35) at the out-feed end (2) are primarily moveable in a back and forth movement as indicated by the arrow (41), but side movements are limited.

When the objects, which may be capilion, herring or shrimps, enter the base unit (20) they slide down the incline base unit (20). The eccentric movement of the base unit has the function that the while the received object slide down the base unit the are being distributed along said base unit (5) due to said eccentric movement as shown in Fig. 1b which is a top view of Fig. 1a. At the in-feed area (1) the received object is relative localized while at the out-feed area (2) the objects have been distributed across the base unit (20) where they drop to the first conveyor (3), which is running at speed v1 which is preferably higher than the speed of the objects at the out-feed area (2). It follows that the objects are distributed additionally along the conveying direction indicated by the arrows in Fig. 1a and 1b. In the embodiment shown in Fig. 1a and 1b, there is another conveyor (4) running at speed v2, where v2 is larger than v1. Therefore, the objects are again distributed additionally in the conveying direction. The objects are here ready to be directed to the grading means, wherein the grading means may be similar as described in US patent No. 6,065,607. A plurality of dividing boards are arranged in between said grading means and the second conveyor (4) to ensure that the orientation of the objects is parallel to the moving direction of the grading means as indicated by the arrows (21). The number of conveyors may easily be varied, i.e. from a single conveyor to a plurality of conveyors. This may depend on the products to be graded, the material of the conveyor belt, and the friction between the objects to be graded an the conveyor belt. What is essential here is that the distribution of the objects is sufficient so that the quality of the grading may be maximized.

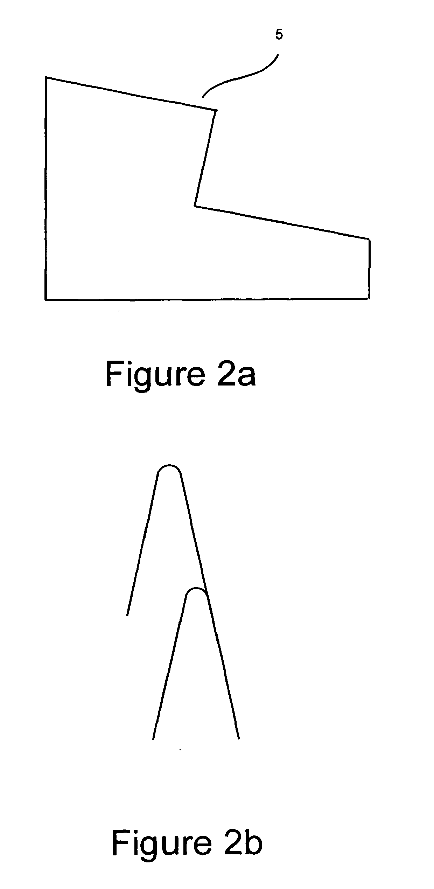

Figure 2a and 2b show the side and a front view of one embodiment of the dividing boards. In this embodiment the dividing boards have stepwise construction. They may also be incline or have different shape (not shown). It is important that the construction of the dividing boards is such that when the object from the second conveyor fall onto the dividing boards the orientation of those objects, which is not parallel to the conveying direction, will be parallel to the conveying direction after falling onto the boards. The dividing boards are therefore adapted to correct the orientation of those objects which orientation is not suitable for the grading.

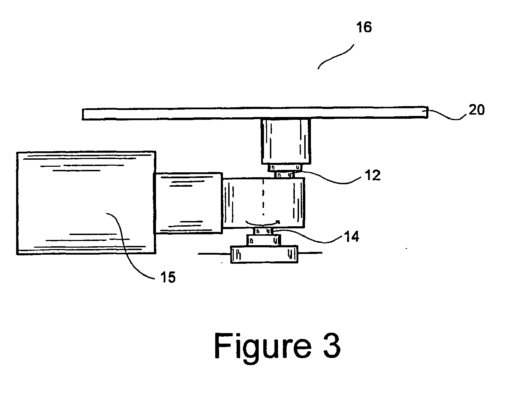

Figure 3 shows one embodiment of said means (16) for generating a eccentric movement of the base unit (20), comprising a rotor (15), a first and a second rotation axis (14, 12), wherein the second rotation axis is mounted to the base unit (20). The rotation speed may easily be controlled depending on the products to be graded.

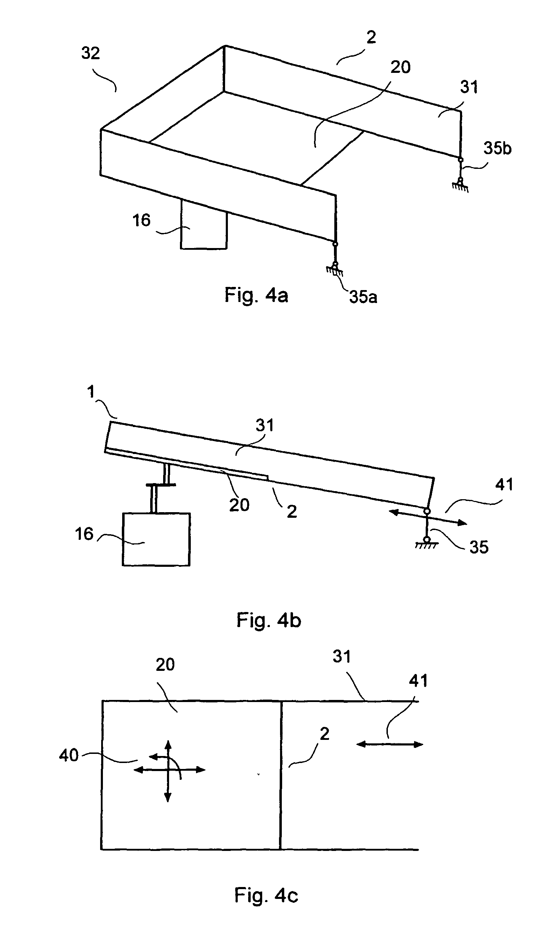

Figure 4a-c show a perspective view, side view and top view of the base unit (20), the side walls (31), the hinges (35) sliding member (32) and said means (16) for generating the eccentric movement and/or rotational movement of the base unit (20) from Fig. 1a-b. In Fig. 4c the movement of the base unit (and the sliding member (32)) is illustrated (40) as well as the back and forth movement of the hinges (35, 41).

## Claims

1. In-feed distributing unit (30) for distributing an uneven stream of individual objects intended to be graded or handled in other way, wherein the distributing unit comprises:
• a frame (10),
• a sliding member (32) having an in-feed area (1) and an out-feed area (2) and a base unit (20) having an approximately planar surface arranged incline on the frame,
• one or more conveyors running at one or more conveying speed arranged below said sliding member adapted to receive the released objects from out-feed area of said sliding member (32) and optionally from the upper arranged conveyor and advancing the objects in the forward direction, and
• grading means arranged below said one or more conveyors (3, 4) for receiving and grading the objects from said conveyors,
wherein said base unit (20) is at least partly moveable in its plane in a continuous eccentric movement, following in that the introduced objects at the in-feed area (3) slide towards said out-feed area (2) due to the incline arrangements of the base unit (20) while being distributed along said base unit (20) through said eccentric movement and wherein said one or more conveyors are adapted to distribute the objects further in the conveying direction through said one or more conveying speed and thereby preparing the objects for grading.

2. In-feed distributing unit according to claim 1, adapted for sorting marine species such as capilion and/or herring and/or shrimps.

3. In-feed distributing unit according to claim 1 or 2, further comprising a plurality of dividing boards (5) extended side-by-side substantially perpendicular to the conveying direction arranged in-between said grading means and its nearest adjacent conveyor adapted to ensure that the objects falling from said nearest adjacent conveyor to said grading means lie parallel to the conveying direction.

4. In-feed distributing unit according to any of the preceding claims, wherein each respective dividing board (5) is substantially parallel to the conveying direction.

5. In-feed distributing unit according to any of the preceding claims, wherein the cross section of each respective board triangular shaped with the broader end arranged adjacent to said grading means and the narrower end to said nearest adjacent conveyor.

6. In-feed distributing unit according to any of the preceding claims, wherein said dividing boards (5) are step-wise shape in its longitudinal direction along the conveying direction.

7. In-feed distributing unit according to any of the preceding claims, wherein the number of conveyors is at least two (3, 4), and wherein the conveyor speed is such that the speed of the uppermost conveyor (3) is lowest and increases with the subsequent conveyor (4) or conveyors.

8. A method for distributing an uneven stream of individual objects intended to be graded or handled in other way, said method comprising:
• feeding the objects to be graded to a sliding member (32) having an in-feed area (1) and an out-feed area (2) and a base unit (20) having an approximately planar surface arranged incline on the frame,
• arranging one or more conveyors running at one or more conveying speed below said sliding member adapted to receive the released objects from out-feed area of said sliding member (32) and optionally from the upper arranged conveyor and advancing the objects in the forward direction, and
• grading the objects from said one or more conveyors,
wherein said base unit (20) is at least partly moveable in its plane in a continuous eccentric movement, following in that the introduced objects at the in-feed area (1) slide towards said out-feed area (2) due to the incline arrangements of the base unit (20) while being distributed along said base unit (20) through said eccentric movement and wherein said one or more conveyors are adapted to distribute the objects further in the conveying direction through said one or more conveying speed and thereby preparing the objects for grading.

9. A method according to claim 8, wherein the number of conveyors is two or more.

10. A method according to claim 8 or 9, further comprising means for providing a plurality of dividing boards arranged in-between said grading means and its nearest adjacent conveyor adapted to ensure that the objects falling from said nearest adjacent conveyor to said grading means lie parallel to the moving direction of said grading means.

## Patentansprüche

1. Vorrichtung zur verteilenden Zuführung (30) zum Verteilen eines unregelmäßigen Stroms einzelner Gegenstände, die sortiert oder auf andere Weise transportiert werden sollen, wobei die verteilende Vorrichtung Folgendes umfasst:
- einen Rahmen (10),
- ein Gleitelement (32) mit einem Zuführungsbereich (1) und einem Abgabebereich (2) und einer Bodeneinheit (20) mit einer nahezu ebenen Fläche, die schräg auf dem Rahmen angeordnet ist,
- einen oder mehrere Förderer, die mit einer oder mehreren Fördergeschwindigkeiten laufen, die unter dem Gleitelement angeordnet sind, zum Aufnehmen der freigegebenen Gegenstände von dem Abgabebereich des Gleitelementes (32) und optional von dem oberen angeordneten Förderer und Vorwärtsbewegen der Gegenstände in der Transportrichtung und
- Sortiermittel, die unter einem oder mehreren Förderern (3, 4) angeordnet sind, um die Gegenstände von den Förderern aufzunehmen und zu sortieren,
wobei die Bodeneinheit (20) mindestens teilweise in ihrer Ebene in einer fortlaufenden exzentrischen Bewegung beweglich ist, was dazu führt, dass die eingeführten Gegenstände im Zuführungsbereich (3) aufgrund der geneigten Anordnungen der Bodeneinheit (20) zum Abgabebereich (2) gleiten, während sie entlang der Bodeneinheit (20) durch die exzentrische Bewegung verteilt werden, und wobei der oder mehrere Förderer die Gegenstände mit einer oder mehreren Fördergeschwindigkeit/en in der Transportrichtung weiter verteilt/en und dadurch die Gegenstände zum Sortieren vorbereitet/n.

2. Vorrichtung zur verteilenden Zuführung nach Anspruch 1 zum Sortieren von Meeresfischen, etwa Lodden und/oder Hering und/oder Schrimps.

3. Vorrichtung zur verteilenden Zuführung nach Anspruch 1 oder 2, ferner umfassend mehrere Trennplatten (5), die nebeneinander im Wesentlichen senkrecht zur Förderrichtung erweitert, zwischen den Sortiermitteln und ihrem nächsten benachbarten Förderer angeordnet sind, um sicherzustellen, dass die von dem nächsten benachbarten Förderer auf das Sortiermittel fallenden Gegenstände parallel zur Förderrichtung liegen.

4. Vorrichtung zur verteilenden Zuführung nach einem der vorhergehenden Ansprüche, wobei jede jeweilige Trennplatte (5) im Wesentlichen parallel zur Förderrichtung liegt.

5. Vorrichtung zur verteilenden Zuführung nach einem der vorhergehenden Ansprüche, wobei der Querschnitt der jeweiligen Platte dreieckig ausgebildet ist, wobei das breitere Ende neben dem Sortiermittel und das schmalere Ende an dem nächsten benachbarten Förderer angeordnet ist.

6. Vorrichtung zur verteilenden Zuführung nach einem der vorhergehenden Ansprüche, wobei die Trennplatten (5) in der Längsrichtung entlang der Förderrichtung stufenweise ausgebildet sind.

7. Vorrichtung zur verteilenden Zuführung nach einem der vorhergehenden Ansprüche, wobei die Anzahl der Förderer mindestens zwei (3, 4) ist und wobei die Förderergeschwindigkeit so gewählt ist, dass die Geschwindigkeit des obersten Förderers (3) am geringsten ist und mit dem oder den folgenden Förderern (4) zunimmt.

8. Verfahren zum Verteilen eines unregelmäßigen Stroms einzelner Gegenstände, die sortiert oder auf andere Weise behandelt werden sollen, wobei das Verfahren Folgendes umfasst:
- Zuführen der zu sortierenden Gegenstände auf ein Gleitelement (32) mit einem Zuführungsbereich (1) und einem Abgabebereich (2) und einer Bodeneinheit (20) mit einer nahezu ebenen Oberfläche, die schräg an dem Rahmen angeordnet ist,
- Anordnen eines Förderers oder mehrerer Förderer, die mit einer oder mehreren Fördergeschwindigkeiten unter dem Gleitelement laufen, zum Aufnehmen der freigegebenen Gegenstände von dem Abgabebereich des Gleitelements (32) und optional von dem oberhalb angeordneten Förderer und Bewegen der Gegenstände in der Transportrichtung, und
- Sortieren der Gegenstände von einem oder mehreren Förderern,
wobei die Bodeneinheit (20) mindestens teilweise in ihrer Ebene in einer fortlaufenden exzentrischen Bewegung beweglich ist, was dazu führt, dass die eingeführten Gegenstände an dem Zuführungsbereich (1) aufgrund der schrägen Anordnungen der Bodeneinheit (20) zu dem Abgabebereich (2) gleiten, während sie entlang der Bodeneinheit (20) aufgrund der exzentrischen Bewegung verteilt werden und wobei ein oder mehrere Förderer die Gegenstände weiter in der Förderrichtung mit einer oder mehreren Transportgeschwindigkeiten transportieren und dadurch die Gegenstände zum Sortieren vorbereiten.

9. Verfahren nach Anspruch 8, wobei die Anzahl der Förderer zwei oder mehr ist.

10. Verfahren nach Anspruch 8 oder 9, das ferner Mittel zum Bereitstellen mehrerer Trennplatten umfasst, die zwischen den Sortiermitteln und ihren nächsten benachbarten Förderern angeordnet sind, um sicher zu stellen, dass die von dem nächsten benachbarten Förderer auf das Sortiermittel fallenden Gegenstände parallel zur Bewegungsrichtung des Sortiermittels liegen.

## Revendications

1. Unité de distribution d'entrée (30) pour distribuer un flux irrégulier d'objets individuels destinés à être calibrés ou manipulés d'une autre façon, l'unité de distribution comprenant :
- un cadre (10),
- un élément coulissant (32) ayant une zone d'entrée (1) et une zone de sortie (2) et une unité de base (20) ayant une surface approximativement planaire aménagée de manière inclinée sur le cadre,
- un ou plusieurs convoyeurs fonctionnant à une ou plusieurs vitesses de transport aménagés en-dessous dudit membre coulissant adaptés pour recevoir les objets libérés de la zone de sortie dudit membre coulissant (32) et optionnellement depuis le convoyeur ménagé dans la partie supérieure et avançant les objets dans la direction avant, et
- un moyen de calibrage ménagé en-dessous dudit ou desdits plusieurs convoyeurs (3, 4) pour recevoir et calibrer les objets desdits convoyeurs,
dans laquelle ladite unité de base (20) est au moins partiellement mobile dans son plan en un mouvement excentrique continu, avec pour conséquence que les objets introduits sur la zone d'entrée (3) glissent en direction de ladite zone de sortie (2) en raison de l'inclinaison de l'unité de base (20) tout en étant distribués le long de ladite unité de base (20) par ledit mouvement excentrique et dans laquelle ledit ou lesdits plusieurs convoyeurs est/sont adaptés pour distribuer les objets plus avant dans la direction de transport avec l'une ou plusieurs vitesse(s) de transport et préparant ainsi les objets pour le calibrage.

2. Unité de distribution d'entrée selon la revendication 1, adaptée pour trier des espèces marines comme le capelin et/ou le hareng et/ou les crevettes.

3. Unité de distribution d'entrée selon la revendication 1 ou 2, comprenant en outre une pluralité de panneaux de division (5) étendus côte à côte essentiellement perpendiculairement à la direction de transport aménagés entre ledit moyen de calibrage et son convoyeur adjacent le plus proche adaptés de manière à garantir que les objets tombant dudit convoyeur adjacent le plus proche vers ledit moyen de calibrage sont parallèles à la direction de transport.

4. Unité de distribution d'entrée selon l'une quelconque des revendications précédentes, dans laquelle chaque panneau de division (5) respectif est essentiellement parallèle à la direction de transport.

5. Unité de distribution d'entrée selon l'une quelconque des revendications précédentes, dans laquelle la section transversale de chaque panneau respectif est de forme triangulaire formée avec l'extrémité la plus large aménagée de manière adjacente audit moyen de calibrage et la partie la plus étroite vers ledit convoyeur adjacent le plus proche.

6. Unité de distribution d'entrée selon l'une quelconque des revendications précédentes, dans laquelle lesdits panneaux de division (5) ont une forme graduée dans leur direction longitudinale le long de la direction de transport.

7. Unité de distribution d'entrée selon l'une quelconque des revendications précédentes, dans laquelle le nombre de convoyeurs est d'au moins deux (3, 4) et dans laquelle la vitesse du convoyeur est telle que la vitesse du convoyeur le plus élevé (3) est la plus basse et augmente avec le convoyeur (4) ou les convoyeurs suivant(s).

8. Procédé de distribution d'un flux irrégulier d'objets individuels destinés à être calibrés ou manipulés d'une autre façon, ledit procédé comprenant :
- l'alimentation des objets à calibrer vers un élément coulissant (32) ayant une zone d'entrée (1) et une zone de sortie (2) et une unité de base (20) ayant une surface approximativement planaire aménagée de manière inclinée sur le cadre,
- l'aménagement d'un ou plusieurs convoyeurs fonctionnant à une ou plusieurs vitesses de transport aménagés en-dessous dudit membre coulissant adaptés pour recevoir les objets libérés de la zone de sortie dudit membre coulissant (32) et optionnellement depuis le convoyeur ménagé dans la partie supérieure et avançant les objets dans la direction avant, et
- le calibrage d'objets provenant dudit ou desdits plusieurs convoyeur(s),
dans lequel ladite unité de base (20) est au moins partiellement mobile dans son plan en un mouvement excentrique continu, avec pour conséquence que les objets introduits sur la zone d'entrée (1) glissent en direction de ladite zone de sortie (2) en raison de l'inclinaison de l'unité de base (20) tout en étant distribués le long de ladite unité de base (20) par ledit mouvement excentrique et dans laquelle ledit ou lesdits plusieurs convoyeurs est/sont adaptés pour distribuer les objets plus avant dans la direction de transport avec l'une ou plusieurs vitesse(s) de transport et préparant ainsi les objets pour le calibrage.

9. Procédé selon la revendication 8, dans lequel le nombre de convoyeurs est de deux ou plus.

10. Procédé selon la revendication 8 ou 9, comprenant en outre un moyen pour fournir une pluralité de panneaux de division étendus côte à côte essentiellement perpendiculairement à la direction de transport aménagés entre ledit moyen de calibrage et son convoyeur adjacent le plus proche adaptés de manière à garantir que les objets tombant dudit convoyeur adjacent le plus proche vers ledit moyen de calibrage sont parallèles à la direction de transport.
